# EUROPEAN PATENT APPLICATION

(11) **EP 0 793 910 A1**
(43) Date of publication of application: **10.09.1997**
(21) Application number: 96830223.2
(22) Date of filing: 19.04.1996
(51) Int. Cl.: A01G 3/037, A01G 3/08, B27B 17/00

(54) **Device for cutting branches and the like**

(30) Priority: 06.03.1996 IT BO960027 U
(71) Applicant: M.A.I.BO. S.r.l., I-40068 S. Lazarro di Savena (Bologna) (IT)
(72) Inventor: Drusiani, Franco, S. Lazzaro di Savena (Bologna) (IT)
(74) Representative: Dall'Olio, Giancarlo

(57) **Abstract**

A device (50) includes an i.c. engine (1) that can be held on a shoulder, for driving a shaft (3) inside a handle (2) via a flexible transmission (4). The shaft (3) operates, via a conic gear system (5), an operational group (8), supported by a head (7) fastened to the top of the handle (2). The operational group (8) includes a chain saw (81) geared with a pinion (84) keyed onto the exit of the conic gear system (5). The device (50) includes a system (40) for the lubrication of the chain saw (81), in which a diaphragm pump (43) is operated by the engine (1) so that the lubricant is withdrawn from a tank (41) and sent to a nozzle sprinkler (46) set under the chain saw (81) in the region of a groove (83a) into which appendixes extending from the chain run.

## Description

The present invention concerns shafts pruning machines with particular reference to devices equipped with a saw and operated by a motor.

Particularly the present invention relates to a device for cutting tree branches and the like.

It is known that branches and similar can be cut by different devices operated manually or by a motor.

Between these latters the most used is a compact chain saw, in which a small i.c. engine operates a chain to which a plurality of sharp cutting bits are fastened; the chain is guided by a plate that defines a predetermined path therefor.

However, these devices have the disadvantage that the operator must be situated very near the branches to cut.

The operator must therefore use staircases, that requires frequent relocations, that consequently result in an increase of the global time necessary for the operations.

There are also devices known as bush-cutters aimed at cutting grass and small branches, essentially comprising an i.c. engine that can be carried on a shoulder and that operates a rotating tool via a flexible transmission. The rotating tool is usually situated at the top of a handle-stick.

The abode described bush-cutter device allows a more comfortable use with respect to the chain saws, and operates in a wider range of action.

But, the bush-cutters have also a drawback that derives from the elevated work speed of the tool, that, in case of possible tool breakup, brings about a real danger for the operator or other people being near the device.

Another drawback results from the fact that the bash-cutter cannot cut branches of big dimensions.

The object of the present innovation is to propose a device for cutting branches and similar, so improved that the operator can stand at a distance from the cutting tool, that in most cases it does not need staircases, and that can cut branches of different diameters with an elevated safety degree for the operator and for other people possibly situated nearby.

The characteristics of the invention which are not evident from what has been just said, will be better understood from the following description, in accordance with the content of the claims and with particular reference to the attached drawings, in which:

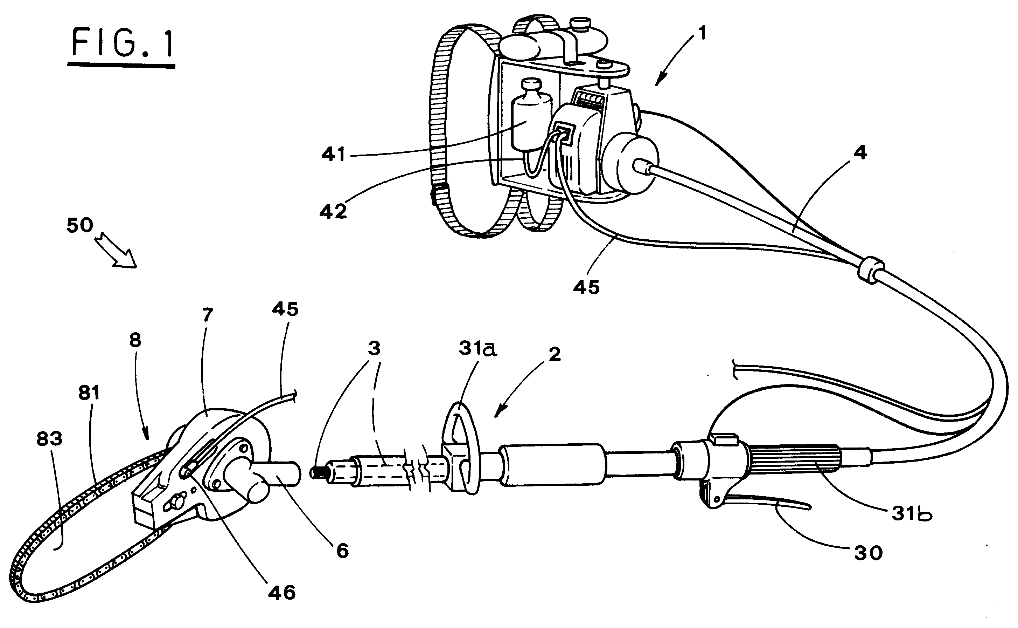

- Fig. 1 shows a general perspective view of the device, with some parts in exploded view;
- Fig. 2 shows a lateral view of an enlarged, with respect to the preceding Figure, detail of the device;
- the Fig. 3 shows a plan view of the detail of Fig. 2;
- the Fig. 4 shows a section view of a particular of the device, taken along the plain IV-IV of Fig. 2;
- the Figs. 5a, 5b show a schematic view of a system, joined to the device, for the forced lubrication of the chain saw.

With reference to the above mentioned the device 50, being the subject of the present invention, includes, among other elements, an i.c. engine 1 of known type, equipped with means that make it fit to be carried on a shoulder by an operator, like a backpack.

The device 50 includes also a handle 2, featuring a fore and rear handgrips, 31a and 31b respectively, with a shaft 3 situated thereinside.

The engine 1 operates a flexible transmission 4, also of known type, that transfers the rotatory motion to the shaft 3, under control of a lever 30 situated beside the rear handgrip 31b.

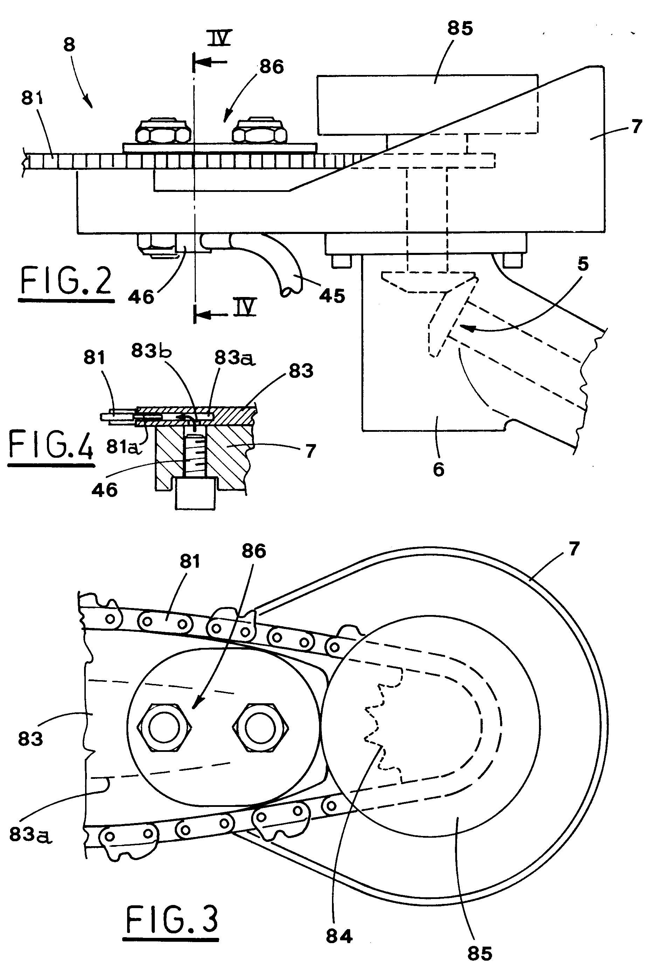

In the region of the top of the handle 2, the shaft 3 is keyed onto the inlet of a conic gear system 5 provided for angular movement transmission (Fig. 2).

The conic gear system 5 is contained in a suitable box 6, to which a head 7, which supports an operational group 8, is movably fastened; the operational group 8 includes a chain saw 81 formed by elements 81a supported by a related plate 83.

Respective appendixes extend from the elements 81a for insertion into a plate peripherical groove 83a that constitutes a guide for the same chain.

The operational group 8 includes also a pinion 84 in gear engagement with the chain saw 81 and integral with a flywheel 85. The pinion 84 is keyed onto the exit of the conic gear system 5 and is therefore driven into rotation, together with the conic gear system 5, by the shaft 3; the presence of the flywheel 85 makes the chain saw 81 movement more uniform.

The plate 83 is fastened to the head 7 by means of screws 86 that allow to adjust the position of the plate 83 with respect to the head 7, before locking, in such a way as to obtain the correct tension of the chain saw 81 with respect to the pinion 84 (Figs. 2 and 3).

The device 50 includes a system 40 that allows to obtain a constant lubrication of the chain saw 81.

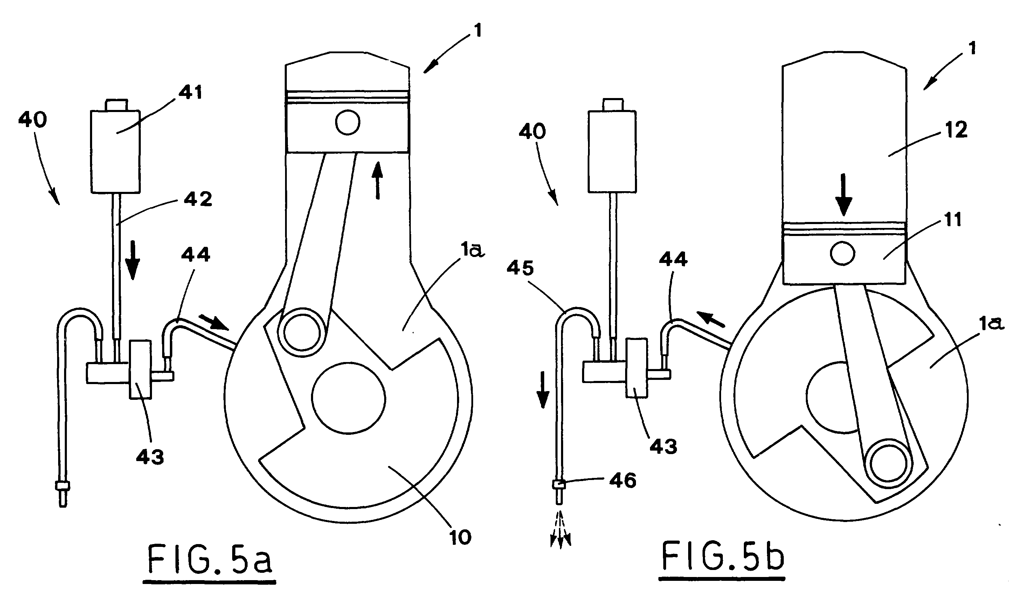

The system 40, illustrated schematically in Figs. 5a and 5b, includes a tank 41, for the lubricating liquid, positioned near the engine 1.

A first pipe 42, connected to the inlet of a diaphragm pump 43, of known type, situated near the engine 1, goes out from the tank 41.

The diaphragm pump 43 is set in communication with the inside of the cover 1a of the engine 1, in the region of the driving shaft 10, by means of a second pipe 44.

A third pipe 45, connected to a nozzle sprinkler 46, is situated at the outlet of the diaphragm pump 43.

Like illustrated in detail in Fig. 4, the nozzle sprinkler 46 is removably fastened to the head 7, in such a position as to result in communication, because of a hole 83b made in the plate 83, with the lower part of the peripherical groove 83a, i.e. below the chain saw 81.

The working of the system 40 is determined by the characteristics of the two-stroke cycle of the engine 1.

As it is known, in such engines the induction stroke occurs when the piston 11 is going up (Fig. 5a), then generating in the cover 1a of the engine 1 below a depression that can intake the explosive mixture from the inlet (not illustrated).

The downward stroke of the piston 11 (Fig. 5b), in the active expansion stroke following the combustion, produces an increase of pressure in the cover 1a of the engine 1, that can send the previously sucked mixture into the cylinder 12, through the supply ducts (not illustrated).

These cyclical variations of pressure/depression in the cover of the engine 1 are used to operate the diaphragm pump 43.

More precisely, during the induction stroke of the engine 1 the diaphragm pump 43 intakes lubricating liquid from the tank 41 (Fig. 5a) and while the downward stroke of the piston 11 is accomplished the lubricant is sent to the nozzle 46 for lubrication of the chain saw 81 (Fig. 5b).

In this way a lubrication is obtained with impulses of frequency proportional to the number of revolutions of the engine 1.

In the shown example the lubricant medium tank 41 is separated from the fuel tank. According to a variation, not shown, the fuel tank and the lubricant tank can be included in only one body with respective compartments, caps and exits.

It is to be pointed out that the angle between the gears of the conic gear system 5 is defined in such a way as to allow the best manoeuvrability of the handle 2, maintaining the cutting line of the saw 81 substantially in alignment with respect to the operator's body.

The advantages of the invention result from what has been said above, in that it is possible to operate with the same comfort as if a bush-cutter were used and with the operational capacity typical for a traditional chain saw, in particular also for cutting branches of big dimensions.

The conformation of the device 50 allows to operate with high safety and with elevated reliability, since the correct and sure lubrication of the chain saw 81 avoids overheating thereof.

Moreover, the adopted constructive solutions are simple and require limited cost.

## Claims

1. Improved device for cutting branches and the like including an i.c. engine (1), that can be carried on a shoulder by an operator, and a handle (2) that is held by the operator and contains a shaft (3) rotated by said i.c. engine (1) via a flexible transmission (4), with the same shaft (3) keyed onto the inlet of a conic gear system (5) contained in a box (6) connected with the top of said handle (2) and designed to operate the same device (50), with the latter characterised in that it includes a head (7), removably fastened to said box (6) and supporting an operational group (8) constituted by a plate (83), along whose periphery a chain saw (81) is guided, operated by a pinion (84) keyed onto the outlet of said conic gear system (5) and integral with a flywheel (85) that makes the movement transmitted from said pinion (84) to said chain saw (81) uniform.

2. Device according to the claim 1 characterised in that it includes screw means (86) for adjustment of the position of said plate (83) with respect to said head (7), before their locking, in such a way as to obtain the correct tension of the chain saw (81).

3. Device according to the claim 1 characterised in that it includes a system (40), for lubricating said chain saw (81) and comprising a tank (41) for lubricant liquid, connected, by a first pipe (42), with the inlet of a diaphragm pump (43) set in communication, via a second pipe (44), with the inside of said engine (1), and operated thereby in two cyclical strokes with frequency proportional to the number of revolutions of said engine (1); in the first of said strokes a predetermined quantity of lubricant is withdrawn from said tank (41), and in the second of said strokes the same quantity of lubricant is delivered, through a third pipe (45), to a nozzle sprinkler (46) connected with said operative group (8) in a position below said chain saw (81).

4. Device according to claim 3 characterised in that said nozzle sprinkler is situated in a hole (83b) made in the support (83) of said chain saw and communicating with an outer guiding groove (83a) that receives appendixes made in the elements (81a) of the same chain.
